# EUROPEAN PATENT APPLICATION

(11) **EP 2 402 402 A1**
(43) Date of publication of application: **04.01.2012**
(21) Application number: 10167704.5
(22) Date of filing: 29.06.2010
(51) Int. Cl.: C09D 5/03, C09D 189/00, C09D 5/06, D06P 1/34, C04B 24/24, C09J 189/00

(54) **Powdered material for the arts or the building industry**

(71) Applicant: Spring Color S.R.L., 60022 Castelfidardo (AN) (IT)
(72) Inventor: MOSCA, Roberto, 60022, CASTELFIDARDO (ANCONA) (IT)
(74) Representative: Faggioni, Carlo Maria

(57) **Abstract**

A material for the arts or for the building industry is described, comprising binders, thickeners and inert materials or anti-caking materials. Said binders are chosen among milk and/or components and/or derivatives thereof and eggs and/or components thereof and represent between 5 and 95% of the overall weight of the material, the thickeners are chosen among methyl-cellulose types, starches, seaweeds and jellies and represent between less than 1% and 15% of the overall weight of the material and the inert materials and anti-caking materials are chosen among calcium carbonate, lime and/or silica and represent between 1 and 90% of the overall weight of the material.

## Description

The present invention refers to a natural-origin material for the arts or for the building industry, to the manufacture thereof and to the combination thereof with other materials, as well as to the use thereof, in particular for use by children.

In particular, the present invention refers to a type of powder colour, advantageously usable especially as learning material by children (drawing, painting and sculpture decoration); however, such material can find application also in other fields such as fine arts, building, restoration, textile industry. Moreover, the present invention refers to combinations of this material with other substances, so as to obtain further arts or building industry materials.

At the moment in nursery schools, kindergartens, primary schools and in their own homes, children use water colours, temperas, felt-tip pens and so-called "finger paint" to colour, generally formulated from petrol-chemical substances: various types of pigments, acrylic and vinyl resins, surfactants, dispersants, wetting agents, preservatives, bactericidal agents, etc.

The fact that these products are often defined "water-based colours" diverts parents and teachers, who do not think in the least about learning about the consequences of prolonged inhalation, contact with the skin and accidental ingestion. They think that manufacturing companies, in particular multinational companies, carry out research aimed at ethical issues and progress, that legislators are competent and incorruptible people, that trade unions are on the alert and defend thoroughly the workers who work in manufacturing departments of raw materials which make up these products, that people responsible for "occupational medicine" or university researchers are economically supported and celebrated with red carpets when they discover that a substance is toxic, harmful or cancer-promoting.

Poor information extends also to the field of the colourings normally used in the food field, for example for ice-creams (both packaged and hand-made ones) or for desserts, which are sometimes also used in certain colours for children's arts. Many thereof imply risks for the children, both in terms of allergic reactions and for the hyperactivity syndrome. Although information from various sources exists, the data however are not always consistent. Many data are still under examination by relevant bodies, others accepted by the law are questioned by consumer protection associations. However, especially some countries ban certain colourings and others do not.

For example the colouring *Tartrazine* (synthetic azo colouring - E 102) is banned in Switzerland, but not in Italy. *Quinolin* yellow (E 104) is admitted in Europe, but banned in Norway, the U.S.A. and Japan. *Amaranth* (E 123), admitted in Europe, but banned in the U.S.A. since 1976 is considered potentially carcinogenic. Synthetic colouring *Indigotine* (E 132) is slightly toxic: in allergic individuals it may cause nausea, vomit, hypertension, skin reactions, breathing problems. It is hence unadvisable for children. Yet it is found in ice-creams, ice lollies, pastes, candied fruit, biscuits and candies. Toxic *Caramel* (E 150) is found in cola-based soft drinks.

Billions of people eat ice-creams and drink soft drinks, unaware of the actual facts and they are hence highly unlikely to have doubts about the colours used to entertain their children, rather than food!

Moreover, identifying the potentially carcinogenic petrochemical substances, given the complex interactions of substances and their toxic-kinetics, is delegated (exclusively for legal purposes) to that veil which is the safety card, a document which changes depending on the law changes and which does not safeguard consumers at all. In addition, in the arts field there is no obligation for manufacturers to clearly state on the label all the components of the products, unlike in the food, pharmaceutical, cosmetic sector; there is hence also a lack of transparency.

It must also be borne in mind that there are many other substances with which the child may come into contact with his hands and mouth, or through the brush in contact with the lips (a classic attitude).

There are pigments containing heavy metals, highly dangerous odourless surfactants, plasticisers declared as carcinogenic by various bodies, asthma-causing solvents, allergy-triggering preservatives. Finally, there are synthetic resins, in particular acrylic and vinyl ones (gluing materials) which in theory (according to the safety card) should not pose a health risk. The problem is that small amounts of carcinogenic monomers may be present therein as manufacturing residues or as accidental alterations and splitting up of the synthetic polymer.

A problem then arises on how to provide the children with really harmless colours which are nevertheless chromatically effective, light-resistant, storable in their package for a suitable time for deposit, distribution, stocking and sale.

Problems of this type have already been faced (and sometimes even solved) in the field of finishes for the building industry, where natural temperas and paints have existed for a long time, without petrochemical components, heavy metals and other harmful substances. There are also harmless pigments such as those coming from officinal dyeing plants, which in this case can be used better than colouring soils, which in their physical-chemical composition may contain metals and are hence to be avoided. The problem that a natural paint for organic building, reformulated to be effective as children's arts colour is that of the natural preserving agents. Normally it contains as preservatives various types of essential oils, natural phenols, vegetable solvents, ammonia and various salts, lime or silicate. These substances, unfortunately, do not go together well with the above said purposes and may be toxic if accidentally ingested by the child or only put in contact with its delicate skin. Therefore the problem which arises is to find a different way of preserving.

WO 97/12946 discloses a varnish which comprises in combination: pigments in a liquid solution, chosen from the group of natural colouring soils; binders chosen from the group of milk, milk casein, egg yolk, egg white, starch paste, potato flour; compounds, mixed with said pigments and binders, chosen from the group of borax, calinite, calcite, kaolin, lime, mica and talcum, sea salt and boron salts; additives, chosen from the group of vegetable oils, lemon juices, wine vinegar and natural waxes.

EP-A-381 928 discloses a water-based paint, based on a water-soluble saccharide, a natural colouring, an inert material and any further additives. As inert material a polysaccharide is used, contained for such purpose in a percentage between 5 and 60% by weight.

EP-A-0 657 512 discloses a method to produce a means for drawing which may be applied to a substrate wherein the means for drawing are prepared mixing together a pigment, a binder and an organosilicon compound, said last compound normally being a low-viscosity volatile methyl-silicone.

GB-A-2 443 026 discloses a binder for varnish combined with various other materials to produce a dray varnish in powder form which can then be mixed with some liquids and be applied as varnish to obtain various surface finishes. The binder consists of a mixture of proteins of casein, soy lecithin, dextrin and cellulose fibres.

The drawbacks set forth above are brilliantly overcome by the present invention, which consists of a material for the arts of for the building industry in powder form, comprising binders, thickeners as well as inert materials or anti-caking agents, characterised in that said binders are chosen among milk and/or components thereof and/or derivatives thereof and eggs and/or components thereof and they represent between 5 and 95% of the total weight of the material, the thickeners being chosen among methyl-cellulose, starches, seaweed and jellies and represent between less than 1% and 15% of the overall weight of the material and the inert materials and anti-caking agents are chosen among calcium carbonate, lime and/or silica and represent between 1 and 90% of the overall weight of the material.

The present invention refers also to mixtures of said materials with colouring materials and/or with diluting emulsions.

The arts material according to the present invention comprises at least one binder, at least one thickener and at least one stabiliser.

Among the advantageously usable binders there are milk, egg and components and/or powder derivatives thereof. They are top quality, food-grade gluing materials which are extremely useful to formulate colours for paper, lightweight cardboard, planks, chalk-based or clay-based sculptures, prepared canvas. They may already be preserved in a liophilised condition. However, when they are wetted with water to obtain the mixture and hence the ready colour (water colour, tempera, gouache,...) they become quickly putrescible; a protection of the so-called dry film of the applied colour must furthermore be provided.

Possible solid, harmless, natural, food-grade preservatives are borax, potassium sorbate and boric acid. The preservatives must be evenly dispersed in the mixture and must not be allowed to sediment creating a set, with possible formation of moulds in the surface layer. The use of thickening materials, such as starches and cellulose types, which must impart the correct viscosity to the mixed colour and act as suspension means for the natural preserving salts is of critical importance. In order to activate and exploit at best the features of these thickeners a slightly alkaline pH is required, typical of the activities of hydrogen ions of a certain proportion of borate sodium, potassium sorbate or boric acid. If the mixture of powder with water was very alkaline, it would tend to become viscous too fast, creating lumps and other unhomogeneities. If, on the contrary, it was acidic or little alkaline, the cellulose types may swell too late with the resulting formation of soft, anti-aesthetic micro spheres.

As stabilisers, in order to improve the spreadability of the arts materials and to avoid too fast a drying of the colour, liophilised sugars and vegetable and animal fats must be used.

It can also be provided to add inert substances. Among these, extremely pure calcium carbonate is preferred, dosed depending on the transparency or covering required by the technical features of the product to be formulated.

If, as arts material, it is wished to obtain a colour (tempera, water colour or other), the most delicate part is the choice of light-resistant pigments which are harmless even if accidentally ingested. The transparency required for water colours and the covering quality required for temperas must also be considered.

For the colour **yellow**, among the best powder pigments we have:
Reseda (the flower tips are used in herbal teas as diuretic and sudatory tea);
Safflower (in addition to its use in the cosmetic industry, it is associated with saffron for *"risotto alla milanese"* (sticky rice with saffron, Milan style, translator's note) as well as for dressing pasta and for colouring sheep cheese);
Annatto or Bixa orellana (colouring and food flavouring).

For the colour **orange** we have:
Paprika (this natural extract is used as flavouring and food colouring);
E160aAlfa, Beta, Gamma-Carotene (extracts from the vegetable pigments of carrots, tomatoes, vegetables with green leaves, apricots, oranges and rose hips. A yellow-orange colouring; in the body it turns to vitamin A).
E161b Lutein (derivative of carotene, one of the vegetable pigments found in green leaves; it is found also in egg yolk. A colouring which goes from yellow to reddish).

The colour red can be obtained from:
Madder (the root of madder is diuretic and antiinflammatory. It is used for bladder infections, against rheumatisms, constipation, it facilitates labour and is especially used in herbal healing for the preparation of hair dyes and dyeing in general).
E120 Cochineal (natural red colouring of egg yolk and also obtained from the extraction of the dried bodies of the females of American cochineal which contains up to 10% of carminic acid, the main colouring of many aperitif drinks). It is nevertheless unadvisable for asthma sufferers and allergic individuals, especially if they are children.
E160d Lycopene (natural extract from tomatoes).

For the colour **blue** the most important and well-known ones are:
Coriander (also known as Chinese parsley, coriander belongs to the same family as cumin, dill, fennel and of course of parsley. The culinary uses of parsley are numerous. It is part of the preparation of various kinds of cold meats and salami, it flavours meats, fish and vegetables; the seeds are used as a spice. It is also used for various herbal teas).
Indigo and woad (the officinal plant *Isatis tinctoria.* In the Sahel regions of Mauritania, indigo is one of the symbols of prestige most sought after: the tunic of the Tuaregs is all indigo, it is considered a noble colour. Mauritanians spread indigo on uncovered body parts, which makes them as blue as the night, protects them from the cold and from sun rays and brings nutrients to the skin. Finds of linen and hemp cloth coloured with blue and dating back to the Neolithic document the ancient use of woad from the Black Sea to Europe, to India, to northern Africa. Plinius reports that the ancient Britons, with the intention of scaring their enemies, used this plant to paint their body).

For violet there are:
Logwood (the officinal plant *Haematoxylon campechianum* is a leguminous plant from Central America. The chopped bark is used, from which a colouring pigment is obtained which goes from violet to blue. Generally the colour obtained is violaceous).
E162 Redbeet red, betanin. Natural extract from redbeet. Violaceous-red food-grade colouring.
E163 anthocyans; E163a pelargonidine; E163b cyanidin; E163c peonidine; E163d delphinidin; E163e petunidine; E163f malvidine (found in the cellular juice of many flowers, fruits, stalks, leaves. Red, blue, violet colourings).

**Green** is obtained from:
E140 chlorophyll and chlorophyllins (extracted from nettles and from alfalfa).
E141 Cupric complexes of chlorophyll (found in ice-creams and desserts). For the colours **brown** and **black** we have:

Walnut husk (liquors are made with it. Walnut husk oil exhibits a protective action from sun rays, due to the presence of juglone. The husk of the black walnut contains active ingredients, of which the most important ones are juglone, tannin and iodine. The wood of the black walnut is dark brown tending towards violet, with a fine veining).

E153 Medicinal vegetable charcoal (of natural origin, from the combustion of vegetables. However, it is a suspicious food colouring banned in the U.S.A.! Some studies have shown that it is suspected of being involved in cancer onset).

For the colour **white** there are:
E170 Calcium carbonate (a largely widespread mineral substance. Surface food colouring, thickening agent, lubricating agent).
E171 Titanium dioxide (obtained from ilmenite. White colouring. It is contained also in certain tooth pastes. However, it may be best avoided by young children).

Finally, some **light metals,** allowed as food colourings but, in our opinion like for titanium dioxide, they should not be used to avoid accidental ingestion by children. They are all banned in Australia:
E172 Iron oxides (pigments common in nature. Yellow, red, brown, orange and black colourings).
E173 Aluminium. (found in nature, in the form of bauxite. Metal colouring. Harmful effects: none if kidneys are healthy).
E174 Silver.
E 175 Gold.

Particularly advantageous results are obtained by choosing - from the above listed pigments - the natural origin ones, which are harmless by ingestion and contact, suitable for food use, light-resistant and which are effective both from a teaching and a chromatic perspective. In particular, they can be chosen from: reseda, safflower, annatto or Bixa orellana, paprika, madder, cochineal, coriander, indigo, woad, logwood, chlorophylls, chlorophyllins, walnut husk, medicinal vegetable charcoal, calcium carbonate, silver.

The mixing of the correct components in the appropriate doses leads to the desired products. In addition to as colour, if no pigments are used, the material according to the present invention may be used as binder, also for the building industry. As can be seen, the advantageous production of powder mixes is obtained, consisting of natural, harmless and food-grade raw materials.

Advantageously, the material according to the present invention can be mixed with colourings and/or with diluting emulsions.

As diluting emulsions, it is preferred an emulsion consisting of milk and/or components and/or derivatives thereof, egg and/or constituents thereof, boiled linseed oil, castor oil, boron salts and essential oils. By using the same material seen before mixed with the emulsion just described in different doses and possibly with the colourings described before, it is possible to obtain products for different use. A large range of different products can thus be obtained, suitably choosing the dosing of components, starting from a really small number of components to be mixed with one another in different preparations.

The invention is now further illustrated based on some application examples, which have purely an illustrative function and do not limit the scope of protection of the invention. EXAMPLE 1 (colour for water colour)
- micronised madder root in an amount between 20 and 40% by weight;
- micronised calcium carbonate in an amount between 20 and 40% by weight;
- powdered milk in an amount between 10 and 30% by weight;
- powdered egg white in an amount between 5 and 10% by weight;
- food-grade borax in an amount between 5 and 10% by weight;
- powdered egg yolk in an amount between 1 and 5% by weight;
- potassium sorbate in an amount between 1 and 5% by weight;
- methyl-cellulose types in an amount lower than 1% by weight;
- modified starches in an amount lower than 1% by weight;
- powdered thickening seaweed and jellies in an amount lower than 1% by weight;
- vegetable fats in an amount lower than 1% by weight;
- sugar in an amount lower than 1% by weight;
- glucose in an amount lower than 1% by weight;
- boric acid in an amount between 0 and 5% by weight;
- dextrose in an amount lower than 1% by weight.

### EXAMPLE 2 (finger paint)

- micronised indigo in an amount between 20 and 40% by weight;
- micronised calcium carbonate in an amount between 30 and 50% by weight;
- powdered milk in an amount between 5 and 20% by weight;
- powdered egg white in an amount between 5 and 10% by weight;
- food-grade borax in an amount between 5 and 10% by weight;
- powdered egg yolk in an amount between 1 and 5% by weight;
- potassium sorbate in an amount between 1 and 5% by weight;
- methylcellulose types in an amount lower than 1% by weight;
- modified starches in an amount lower than 1% by weight;
- powdered thickening seaweed and jellies in an amount lower than 1% by weight;
- vegetable fats in an amount lower than 1% by weight;
- sugar in an amount lower than 1% by weight;
- glucose in an amount lower than 1% by weight;
- boric acid in an amount between 0 and 5% by weight;
- dextrose in an amount lower than 1% by weight.

### EXAMPLE 3 (colour for tempera)

- reseda for micronised herbal tea in an amount between 15 and 25% by weight;
- crystal calcium carbonate in an amount between 30 and 60% by weight;
- powdered milk in an amount between 10 and 40% by weight;
- powdered egg white in an amount between 15 and 30% by weight;
- food-grade borax in an amount between 5 and 10% by weight;
- powdered egg yolk in an amount between 1 and 5% by weight;
- potassium sorbate in an amount between 1 and 5% by weight;
- methyl-cellulose types in an amount below 1% by weight;
- modified starches in an amount below 1% by weight;
- powdered thickening seaweed and jellies in an amount below 1% by weight;
- vegetable fats in an amount below 1% by weight;
- sugar in an amount below 1% by weight;
- glucose in an amount below 1% by weight;
- boric acid in an amount between 0 and 5% by weight;
- dextrose in an amount below 1% by weight.

### EXAMPLE 4 (colour for consolidating chalk-based or clay-based sculptures)

- powdered milk in an amount between 10 and 40% by weight;
- powdered egg white in an amount between 15 and 30% by weight;
- powdered egg yolk in an amount between 5 and 10% by weight;
- powdered walnut husks for liquors in an amount between 0 and 10% by weight;
- micronised calcium carbonate in an amount between 5 and 10% by weight;
- food-grade borax in an amount between 5 and 10% by weight;
- potassium sorbate in an amount between 1 and 5% by weight;
- methyl-cellulose types in an amount lower than 1% by weight;
- modified starches in an amount lower than 1% by weight;
- powdered thickening seaweed and jellies in an amount lower than 1% by weight;
- vegetable fats in an amount lower than 1% by weight;
- sugar in an amount lower than 1% by weight;
- glucose in an amount lower than 1% by weight;
- boric acid in an amount between 0 and 5% by weight;
- dextrose in an amount lower than 1% by weight.

### EXAMPLE 5 (antique finish for dry temperas - fine arts)

- powdered egg white in an amount between 20 and 40%;
- powdered egg yolk in an amount between 5 and 20%;
- food-grade borax in an amount between 5 and10%;
- vegetable fats in an amount between 1 and 5%;
- powdered reseda in an amount between 1 and 5%;
- micronised calcium carbonate in an amount between 1 and 5%;
- potassium sorbate in an amount between 1 and 5%;
- methyl-cellulose types in an amount by weight lower than 1%;
- modified starches in an amount by weight lower than 1%;
- powdered thickening seaweed and jellies in an amount by weight lower than 1%;
- sugar in an amount by weight lower than 1%;
- dextrose in an amount by weight lower than 1%;
- boric acid in an amount between 0 and 5%;
- glucose in an amount by weight lower than 1%.

### EXAMPLE 6 (ornamental wall paint)

- micronised paprika in an amount between 5 and 50%;
- crystal calcium carbonate in an amount between 20 and 50%;
- powdered milk in an amount between 10 and 40%;
- powdered egg white in an amount between 15 and 30%;
- food-grade borax in an amount between 5 and 10%;
- powdered common lime in an amount between 5 and 10%;
- powdered egg yolk in an amount between 1 and 5%;
- potassium sorbate in an amount between 1 and 5%;
- methyl-cellulose types in an amount by weight lower than 1%;
- modified starches in an amount by weight lower than 1%;
- powdered thickening seaweed and jellies in an amount by weight lower than 1%;
- vegetable fats in an amount by weight lower than 1%;
- sugar in an amount by weight lower than 1%;
- dextrose in an amount by weight lower than 1%;
- boric acid in an amount between 0 and 5%;
- glucose in an amount by weight lower than 1%.

### EXAMPLE 7 (additive for various painting mixtures)

- powdered milk in an amount between 30 and 70%;
- crystal calcium carbonate in an amount between 20 and 50%;
- food-grade borax in an amount between 10 and 30%;
- micronised calcium carbonate in an amount between 5 and 30%;
- powdered egg white in an amount between 0 and 20%;
- powdered common lime in an amount between 0 and 20%;
- powdered egg yolk in an amount between 0 and 5%;
- potassium sorbate in an amount between 1 and 10%;
- titanium dioxide in an amount between 0 and 5%;
- methyl-cellulose types in an amount between 1 and 5%;
- modified starches in an amount between 1 and 5%;
- powdered thickening seaweed and jellies in an amount between 1 and 5%;
- vegetable fats in an amount between 1 and 5%;
- sugar in an amount by weight lower than 1%;
- dextrose in an amount by weight lower than 1%;
- boric acid in an amount between 0 and 5%;
- glucose in an amount by weight lower than 1%.

### EXAMPLE 8 (filler or mortar for the building industry)

- crystal calcium carbonate in an amount between 40 and 70%;
- micronised calcium carbonate in an amount between 5 and 30%;
- powdered milk in an amount between 5 and 20%;
- powdered lime in an amount between 0 and 30%;
- food-grade borax in an amount between 5 and 10%;
- powdered egg white in an amount between 0 and 10%;
- potassium sorbate in an amount between 1 and 5%;
- titanium dioxide in an amount between 0 and 5%;
- methyl-cellulose types in an amount lower than 1% by weight;
- modified starches in an amount lower than 1% by weight;
- powdered thickening seaweed and jellies in an amount lower than 1% by weight;
- vegetable fats in an amount lower than 1% by weight;
- sugar in an amount lower than 1% by weight;
- dextrose in an amount lower than 1% by weight;
- boric acid in an amount between 0 and 5% by weight;
- glucose in an amount lower than 1% by weight.

### EXAMPLE 9 (wood varnish)

- walnut husks for liquors in an amount between 5 and 40% by weight;
- crystal calcium carbonate in an amount between 10 and 50% by weight;
- micronised calcium carbonate in an amount between 10 and 50% by weight;
- powdered milk in an amount between 15 and 35% by weight;
- food-grade borax in an amount between 5 and 10% by weight;
- powdered egg white in an amount between 1 and 5% by weight;
- powdered egg yolk in an amount between 0 and 5% by weight;
- potassium sorbate in an amount between 1 and 5% by weight;
- methyl-cellulose types in an amount lower than 1% by weight;
- modified starches in an amount lower than 1% by weight;
- powdered thickening seaweed and jellies in an amount lower than 1% by weight;
- boric acid in an amount between 0 and 5% by weight;
- vegetable fats in an amount lower than 1% by weight.
EXAMPLE 10 (dye for wool, cotton, linen, hemp cloth)
- micronised reseda in an amount between 10 and 30% by weight;
- micronised safflower in an amount between 5 and 20% by weight;
- micronised calcium carbonate in an amount between 5 and 10% by weight;
- powdered milk in an amount between 10 and 30% by weight;
- powdered egg white in an amount between 5 and 10% by weight;
- food-grade borax in an amount between 5 and 10% by weight;
- alum in an amount between 2 and 6% by weight;
- modified starches in an amount lower than 1% by weight;
- boric acid in an amount between 0 and 5% by weight;
- powdered thickening seaweed and jellies in an amount lower than 1% by weight.

### EXAMPLE 11 (glue)

- powdered casein in an amount by weight between 5 and 20%;
- powdered serum in an amount by weight between 5 and 40%;
- food-grade borax in an amount by weight between 5 and 20%;
- potassium sorbate in an amount between 1 and 5%;
- methyl-cellulose taken in an amount by weight between 1 and 10%;
- starches in an amount between 1 and 5% by weight;
- lime in an amount between 1 and 10% by weight;
- silica in an amount between 1 and 10% by weight.

### EXAMPLE 12 (vapour-permeable paint)

- Product according to EXAMPLE 7,5 parts in volume
- water 6 parts in volume
- pigment 2 parts in volume

### EXAMPLE 13 (washable paint)

- Product according to EXAMPLE 7,5 parts in volume
- water 5 parts in volume
   after mixing add
- emulsion of milk, egg, boiled linseed oil, castor oil, boron salts, essential oils 1 part in volume
- pigment 2 part in volume

### EXAMPLE 14 (filler)

- Product according to EXAMPLE 7,5 parts in volume
- water 2 parts in volume

### EXAMPLE 15 (glossy decoration filler)

- Product according to EXAMPLE 7,5 parts in volume
- water 2 parts in volume
after mixing add:
— emulsion of milk, egg, boiled linseed oil, castor oil, boron salts, essential oils 1 part in volume
— white pigment 2 parts in volume
— other pigment 1 part in volume.

## Claims

1. Powdered material for the arts or for the building industry, comprising binders, thickeners and inert or anti-caking materials, **characterised in that** said binders are chosen among milk and/or components and/or derivatives thereof and eggs and/or components thereof and they represent between 5 and 95% of the overall weight of the material, the thickeners are chosen among methyl-cellulose types, starches, seaweeds and jellies and represent between less than 1% and 15% of the overall weight of the material and the inert and anti-caking materials are chosen between calcium carbonate, lime and/or silica and represent between 1 and 90% of the overall weight of the material.

2. Material for the arts or for the building industry as claimed in claim 1), **characterised in that** it further comprises one or more among preservatives (chosen in the group comprising sodium borate, potassium sorbate and boric acid), stabilisers (chosen in the group of vegetable fats, animal fats and sugars) and/or pigments.

3. Material for the arts or for the building industry as claimed in claim 1) or 2), **characterised in that** it consists of (percentages on the total dry weight of the material): pigment in an amount between 20 and 40%; micronised calcium carbonate in an amount between 20 and 40%; powdered milk in an amount between 10 and 30%; powdered egg white in an amount between 5 and 10%; food-grade borax in an amount between 5 and 10%; powdered egg yolk, in an amount between 1 and 5%; potassium sorbate in an amount between 1 and 5%; methyl-cellulose types in an amount lower than 1% by weight; modified starches in an amount lower than 1% by weight; powdered thickening seaweed and jellies in an amount lower than 1% by weight; vegetable fats in an amount lower than 1% by weight; sugar in an amount lower than 1% by weight; glucose in an amount lower than 1% by weight; boric acid in an amount between 0 and 5% by weight; dextrose in an amount lower than 1% by weight.

4. Material as claimed in claim 1) or 2), **characterised in that** it consists of (percentages on the overall dry weight of the material): pigment in an amount between 20 and 40%; micronised calcium carbonate in an amount between 30 and 50%; powdered milk in an amount between 5 and 20%; powdered egg white in an amount between 5 and 10%; food-grade borax in an amount between 5 and 10%; powdered egg yolk in an amount between 1 and 5%; potassium sorbate in an amount between 1 and 5%; methyl-cellulose types in an amount lower than 1% by weight; modified starches in an amount lower than 1% by weight; powdered thickening seaweed and jellies in an amount lower than 1% by weight; vegetable fats in an amount lower than 1% by weight; sugar in an amount lower than 1% by weight; glucose in an amount lower than 1% by weight; boric acid in an amount between 0 and 5%; and dextrose in an amount lower than 1% by weight.

5. Material as claimed in claim 1) or 2), **characterised in that** it consists of (percentages on the overall dry weight of the material): pigment in an amount between 15 and 25%; crystal calcium carbonate in an amount between 30 and 60%; powdered milk in an amount between 10 and 40%; powdered egg white in an amount between 5 and 10%; powdered egg yolk in an amount between 1 and 5%; potassium sorbate in an amount between 1 and 5%; methyl-cellulose types in an amount lower than 1% by weight; modified starches in an amount lower than 1% by weight; powdered thickening seaweed and jellies in an amount lower than 1% by weight; vegetable fats in an amount lower than 1% by weight; sugar in an amount lower than 1% by weight; glucose in an amount lower than 1% by weight; boric acid in an amount between 0 and 5%; and dextrose in an amount lower than 1% by weight.

6. Material as claimed in claim 1) o in 2), **characterised in that** it consists of (percentages on the overall dry weight of the material); powdered milk in an amount between 10 and 40%; powdered egg white in an amount between 15 and 30%; powdered egg yolk in an amount between 5 and 10%; pigment in an amount between 5 and 10%; micronised calcium carbonate in an amount between 5 and 10%; food-grade borax in an amount between 5 and 10%; potassium sorbate in an amount between 1 and 5%; methyl-cellulose types in an amount lower than 1% by weight; modified starches in an amount lower than 1% by weight; powdered thickening seaweed and jellies in an amount lower than 1% by weight; vegetable fats in an amount lower than 1% by weight; sugar in an amount lower than 1% by weight; glucose in an amount lower than 1% by weight; boric acid in an amount between 0 and 5%; and dextrose in an amount lower than 1% by weight.

7. Material as claimed in claim 1) or 2), **characterised in that** it consists of (percentages on the overall dry weight of the material): powdered egg white in an amount between 20 and 40%; powdered egg yolk in an amount between 5 and 20%; food-grade borax in an amount between 5 and 10%; vegetable fats in an amount between 1 and 5%; pigment in an amount between 1 and 5%; micronised calcium carbonate in an amount between 1 and 5%; potassium sorbate in an amount between 1 and 5%; methyl-cellulose types in an amount lower than 1% by weight; modified starches in an amount lower than 1% by weight; powdered thickening seaweed and jellies in an amount lower than 1% by weight; sugar in an amount lower than 1% by weight; dextrose in an amount lower than 1% by weight; boric acid in an amount between 0 and 5%; and glucose in an amount lower than 1% by weight.

8. Material as claimed in claim 1) or 2), **characterised in that** it consists of (percentages on the overall dry weight of the material): pigment in an amount between 5 and 50%; crystal calcium carbonate in an amount between 20 and 50%; powdered milk in an amount between 10 and 40%; powdered egg white in an amount between 15 and 30%; food-grade borax in an amount between 5 and 10%; powdered common lime in an amount between 5 and 10%; powdered egg yolk in an amount between 1 and 5%; potassium sorbate in an amount between 1 and 5%; methyl-cellulose types in an amount lower than 1% by weight; modified starches in an amount lower than 1% by weight; powdered thickening seaweed and jellies in an amount lower than 1% by weight; vegetable fats in an amount lower than 1% by weight; sugar in an amount lower than 1% by weight; dextrose in an amount lower than 1% by weight; boric acid in an amount between 0 and 5%; and glucose in an amount lower than 1% by weight.

9. Material as claimed in claim 1) or 2), **characterised in that** it consists of (percentages on the overall dry weight of the material): powdered milk in an amount between 30 and 70%; crystal calcium carbonate in an amount between 20 and 50%; food-grade borax in an amount between 10 and 30%; micronised calcium carbonate in an amount between 5 and 30%; powdered egg white in an amount between 0 and 20%; powdered lime in an amount between 0 and 20%; powdered egg yolk in an amount between 0 and 5%; potassium sorbate in an amount between 1 and 10%; titanium dioxide in an amount between 0 and 5%; methyl-cellulose types in an amount between 1 and 5%; modified starches in an amount between 1 and 5%; powdered thickening seaweed and jellies in an amount between 1 and 5%; vegetable fats in an amount between 1 and 5%; sugar in an amount lower than 1% by weight; dextrose in an amount lower than 1% by weight; boric acid in an amount between 0 and 5%; glucose in an amount lower than 1% by weight.

10. Material as claimed in claim 1) or 2), **characterised in that** it consists of (percentages on the overall dry weight of the material): crystal calcium carbonate in an amount between 40 and 70%; micronised calcium carbonate in an amount between 5 and 30%; powdered milk in an amount between 5 and 20%; powdered lime in an amount between 0 and 30%; food-grade borax in an amount between 5 and 10%; powdered egg white in an amount between 0 and 10%; potassium sorbate in an amount between 1 and 5%; titanium dioxide in an amount between 0 and 5%; methyl-cellulose types in an amount lower than 1% by weight; modified starches in an amount lower than 1% by weight; powdered thickening seaweed and jellies in an amount lower than 1% by weight; vegetable fats in an amount lower than 1% by weight; sugar in an amount lower than 1% by weight; dextrose in an amount lower than 1% by weight; boric acid in an amount between 0 and 5%; and glucose in an amount lower than 1% by weight.

11. Material as claimed in claim 1) or 2), **characterised in that** it consists of (percentages on the overall dry weight of the material): pigment in an amount between 5 and 40%; crystal calcium carbonate in an amount between 10 and 50%; micronised calcium carbonate in an amount between 10 and 50%; powdered milk in an amount between 15 and 35%; food-grade borax in an amount between 5 and 10%; powdered egg white in an amount between 1 and 5%; powdered egg yolk in an amount between 0 and 5%; potassium sorbate in an amount between 1 and 5%; methyl-cellulose types in an amount lower than 1% by weight; modified starches in an amount lower than 1% by weight; powdered thickening seaweed and jellies in an amount lower than 1% by weight; boric acid in an amount between 0 and 5%; and vegetable fats in an amount lower than 1% by weight.

12. Material as claimed in claim 1) or 2), **characterised in that** it consists of (percentages on the overall dry weight of the material): pigment in an amount between 10 and 30%; micronised safflower in an amount between 5 and 20%; micronised calcium carbonate in an amount between 5 and 10%; powdered milk in an amount between 10 and 30%; powdered egg white in an amount between 5 and 10%; food-grade borax in an amount between 5 and 10%; alum in an amount between 2 and 6%; modified starches in an amount lower than 1% by weight; boric acid in an amount between 0 and 5%; and powdered thickening seaweed and jellies in an amount lower than 1% by weight.

13. Mixture consisting of a material according to any one of the preceding claims and of a thinner in emulsion, **characterised in that** said thinner consists of milk and/or components and/or derivatives thereof, egg and/or constituents thereof, boiled linseed oil, castor oil, boron salts and essential oils.

14. Mixture as claimed in claim 14), **characterised in that** it comprises 5 parts in volume of a material as claimed in claim 9), 6 parts in volume of water and 2 parts in volume of a pigment.

15. Mixture as claimed in claim 14), **characterised in that** it comprises 5 parts in volume of a material as claimed in claim 9), 1 part in volume of thinner and 2 parts in volume of a pigment.

16. Use of a material as claimed in any one of claims 1) to 13) or of a mixture as claimed in any one of claims 14) to 16), such as water colour, finger paints, temperas, colour for consolidating chalk-based or clay-based sculptures, antique finish, wall paint, additive for paint mixtures, filler, mortar, wood varnish, glass varnish, dye for wool, cotton, linen and hemp cloth, glue.
